# EUROPEAN PATENT SPECIFICATION

(11) **EP 1 762 049 B1**
(45) Date of publication and mention of the grant of the patent: **12.10.2016**
(21) Application number: 05753842.3
(22) Date of filing: 23.06.2005
(51) Int. Cl.: H04L 29/06, H04L 12/46

(54) **METHOD FOR FAST DETERMINING OF CONNECTION PATHS IN MULTI-DOMAIN VIRTUAL PRIVATE NETWORKS**
VERFAHREN ZUR SCHNELLEN BESTIMMUNG VON VERBINDUNGSWEGEN IN VIRTUELLEN PRIVATEN NETZWERKEN MIT MEHREREN DOMÄNEN
PROCEDE PERMETTANT DE DETERMINER RAPIDEMENT DES VOIES DE CONNEXION DANS DES RESEAUX PRIVES VIRTUELS MULTIDOMAINE

(30) Priority: 30.06.2004 WO PCT/SE2004/001065
(43) Date of publication of application: 14.03.2007
(73) Proprietor: Telefonaktiebolaget LM Ericsson (publ), 164 83 Stockholm (SE)
(72) Inventor: MÅNGS, Jan-Erik, S-170 72 Solna (SE); FLINTA, Christofer, S-118 63 Stockholm (SE)
(74) Representative: Boco IP Oy Ab
(86) International application number: PCT/SE2005/001004
(87) International publication number: WO 2006/004500

(56) References cited:
- EP-A1- 1 156 625
- US-A1- 2004 034 702
- EL-DARIEBY M. ET AL: 'A Hierarchical Distributed Protocol for MPLS Path Creation', [Online] 11 March 2002, XP003005763 Retrieved from the Internet: <URL:http://www.sce.carleton.ca/faculty/pet riu/papers/ISCC2002submit.pdf>

## Description

### TECHNICAL FIELD

The present invention relates in general to virtual private networks in communications systems and in particular to determination of connection paths of virtual private networks in multi-domain communications systems.

### BACKGROUND

A Virtual Private Network (VPN) utilises a public or private communications network to conduct private communications. Traditionally, a company or other customer that wanted to build a wide-area network had to provide for its own dedicated lines between each node to provide the connectivity. Such solutions are, however, generally expensive and inflexible. During the last years, the concept of VPNs has evolved rapidly. VPNs offer a solution, where a communications network is shared between many customers, but where the communication of each customer is virtually separated. VPN technology is often based on the idea of tunnelling. Network tunnelling involves establishing and maintaining a logical network connection. On this connection, packets are encapsulated within some other base or carrier protocol. They are then transmitted between VPN client and server and eventually de-encapsulated on the receiver side. Authentication and encryption assists in providing security.

A tendency is that the number of network nodes that form a VPN grows fast, which results in large complex network structures and topology. This is caused, partly because of the increasing traffic on VPNs and partly on that the VPNs are requested to cover larger and larger geographical areas. Communication networks providing VPNs having nodes at all continents are present today. However, the more nodes and the more traffic that is to be transmitted, the more complex the configuration of VPNs becomes.

Conventionally, a VPN is created according to an agreement between a network operator and a customer. The location of the nodes, the quality of service and other conditions are agreed on and a programmer at the operator sets up the configuration manually or by consulting configuration aid tools. When having more and more complex communications networks, such configuration becomes more and more complex and time consuming. Furthermore, when a customer wants to modify its VPN, the entire procedure has to be repeated.

In a paper by El-Darieby et al ('A Hierarchical Distributed Protocol for MPLS Path Creation' 11 March 2003, XP003005763) a new hierarchical distributed protocol for the provisioning of MPLS-based tunnels is proposed. The protocol encapsulates the required signaling and routing. Further US 20040034702 discloses that Intra-domain routing information may be exchanged between multiple VPN sites on a VPN by establishing a network device as a BGP router reflector and establishing BGP peering sessions between each VPN site and the BGP router reflector.

The general trend in communication network development goes to more and more flexible solutions. Mobile and wireless communication technologies are used, not only between different end terminals and a network, but also between different network parties. The flexibility in connecting and disconnecting entire part networks makes situations, where a network continuously changes its appearance, more and more common. The task of configuring a VPN in such a dynamic network becomes extremely difficult, since the conditions are continuously changing. This is particularly difficult when manual configuring is utilised, since the programmer always has to be updated about any changes in network topology. In such dynamic networks, a fast configuration is often more desirable than an absolute optimum one, since the conditions are continuously changing which also changes the optimum.

### SUMMARY

A general problem of prior-art solutions is thus that communications networks providing virtual private networks having a large geographical coverage and/or having large traffic become very complex. A further problem is that configuration of new VPNs or modifications of already existing VPNs become complex and time consuming, in particular in networks having large topology dynamics. A further problem is that communication resources of network operators covering smaller geographical areas cannot be generally utilised for wide-area VPNs.

A general object of the present invention is thus to improve methods for determining connection paths of VPNs as well as providing systems and devices suitable therefore. A further object of the present invention is to provide methods for finding connection paths of VPNs utilising more than one network domain. Another further object of the present invention is make methods and arrangements for determining useable connection paths in multi-domain networks faster.

The above objects are achieved by methods and devices according to the enclosed patent claims. In general words, an information request about a certain VPN is sent from a first domain to an adjacent domain. If the adjacent domain has information available about how to reach the VPN in question, such connection path information is returned to the requesting domain. If the suitable connection path information is not available in the domain, the request is forwarded to further adjacent domains, whereby the information request is propagated through the communication network in a cascaded manner. When the appropriate VPN or connection path information thereof is found, this information is returned to the originally requesting domain, preferably along the same path as the request has been forwarded, but in opposite direction. The connection path is thereby achieved by a cascaded information pull mechanism. Preferably, the method and arrangements comprises means for prohibiting endless loops of information requests among the network domains. The connection path information could in the simplest form be just an acknowledgement that the requested VPN is reachable through the domain in question. In preferable embodiments, however, information about the links to use is comprised in the connection path information. In particular embodiments, forwarding of the information request is performed also when there is information about the requested VPN available in the domain. This enables findings of alternative or additional paths to the requested VPN, whereby reconfiguring or additional configuring can be performed at a later stage.

One important advantage with the present invention is that it provides a simple and stable platform on which operators of different domains can cooperate. The domain VPN information is made available for supporting VPN configuration in essentially all domains of a multi-domain system in a fast manner, which is essential in networks having a dynamic topology.

### BRIEF DESCRIPTION OF THE DRAWINGS

The invention, together with further objects and advantages thereof, may best be understood by making reference to the following description taken together with the accompanying drawings, in which:
FIG. 1 is a schematic illustration of a multi-domain communications network providing virtual private networks;
FIG. 2A is a schematic illustration of VPN information collection according to an embodiment of the present invention;
FIGS. 2B-D are schematic illustrations of VPN information collection according to other embodiments of the present invention;
FIGS. 3A-D are embodiments according to the present invention of VPN control node configurations within a domain;
FIG. 4 is a schematic illustration of information request forwarding and connection path information replies according to an embodiment of the present invention;
FIG. 5 is a schematic illustration of an endless loop situation in information request forwarding;
FIG. 6 is a block scheme of an embodiment of a general VPN control node according to the present invention;
FIG. 7 is a schematic illustration of VPN configuration according to one embodiment of the present invention; and
FIG. 8 is a flow diagram illustrating the main steps of an embodiment of a method according to the present invention.

### DETAILED DESCRIPTION

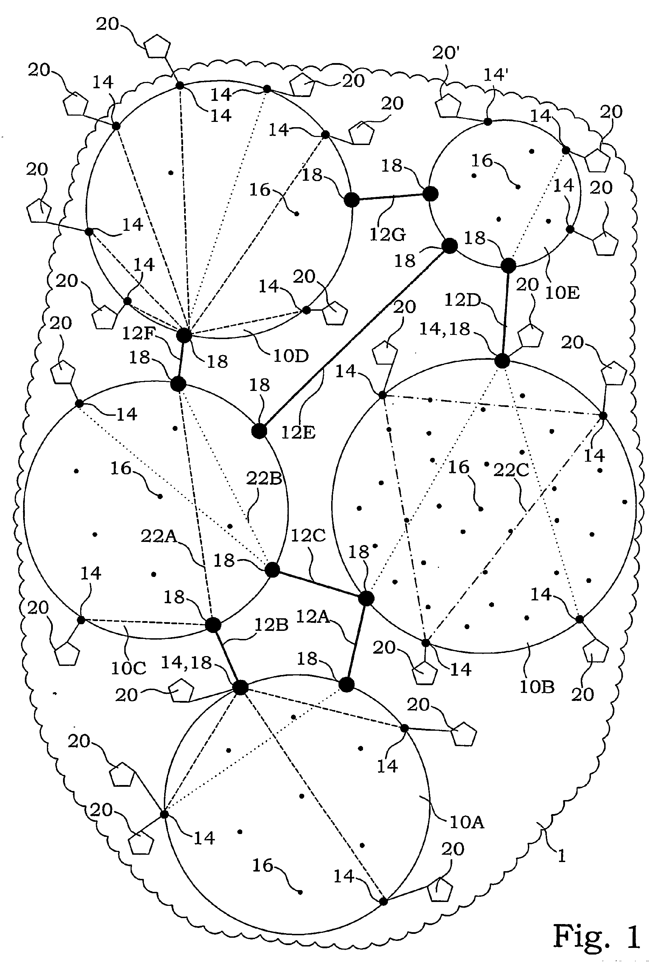

An embodiment of a general VPN provider architecture 1 is illustrated in Fig. 1. In this VPN Provider Architecture, there are five VPN Provider Domains 10A-E present, which are attached to each other by interdomain data connections 12A-G. One operator may control one or more of these domains 10A-E, or they can all be controlled by separate operators. The relation between the domains 10A-E, i.e. the control of the interdomain data connections 12A-G are typically regulated according to agreements between the involved operators, e.g. a VPN Service Level Agreement (SLA). Each VPN provider domain 10A comprises VPN edge nodes 14 and core nodes 16, which can be VPN aware or VPN unaware, of which only a few are provided with reference numbers. The VPN edge nodes 14 are nodes through which customer sites 20 of different customers are connected to different VPN's in the architecture 1. VPN unaware nodes 16 are just intermediate nodes within a domain and is only used for forwarding messages and data between VPN edge nodes 14. The customers are unaware of which VPN unaware nodes that are used for the communication. The only important matter is the starting and ending VPN edge node 14. A VPN connected in a domain can thus be represented by a direct line between VPN edge nodes 14, even if the actual communication may take place via one or several VPN unaware nodes 16. In the remaining part of the present disclosure, the existence of VPN unaware nodes will in general be neglected, since the basic procedural steps according to the present invention are not directly dependent on the existence of any VPN unaware nodes 16 or not. In the practical implementation, it is, however, likely that VPN unaware nodes 16 are used for providing the actual connectivity.

The VPN provider domains 10A-E are connected in a data plane via VPN border nodes 18, i.e. the interdomain data connections 12A-G start and end in a VPN border node 18. The VPN border node 18 may or may not at the same time also act as a VPN edge node 14. A customer site 20 is connected to one of the VPN edge nodes 14. Customer sites 20 of the same customer may then be connected through the VPN provider domains 10A-E by a VPN 22A-C. One customer may have customer sites 20 connected to different VPN's 22A-C. Also, more than one customer site 20 can be connected to the same VPN edge node 14, but will be unaware of the existence of the other customer site 20 as well as of the VPN to which the other customer site 20 is connected.

In the present embodiment, three VPN's 22A-C are illustrated. However, anyone skilled in the art realises that the number of VPN's in a real system typically is much higher. A first VPN 22A, illustrated by broken lines, is extended over three domains 10A, 10C, 10D and connects customer sites 20 in all of these domains. A second VPN 22B, illustrated by dotted lines, is extended over all domains 10A-E of the present embodiment. Finally, a third VPN 22C, illustrated by a dash-dotted line, connects customer sites 20 only within the domain 10B. Each customer site 20 is unaware of the existence of customer sites 20 of other customers as well as of the existence of any VPN's except the one it is connected to. In such a manner, the privacy character of the VPN's is preserved, although they all share the same basic communications resources. This is the scenario in which the present invention preferably operates.

In the present disclosure, different connections are discussed - interdomain, intradomain, user plane connections, control plane connections, overlay control connections, connections between nodes and user terminals etc. It is assumed throughout the entire description that these connections can be of any kind. The basic idea of the present invention is not dependent on the actual connection technology. This means that both wired and wireless technologies can be used for any of these connections. In particular, concerning the use of wireless connections, the user terminals can be mobile relative to the edge nodes. The nodes within a domain can be mobile relative to the other nodes. Even the domains may be mobile relative to each other.

Now, consider that a new customer site 20' is connected to a VPN edge node 14' in domain 10E. If the customer site 20' wants to be connected to VPN 22B, the procedures are probably relatively simple, since the VPN 22B already is present within domain 10E. Manual or automatic VPN reconfiguration procedures according to prior art may be employed, as well as mixes therebetween. However, if the new customer site 20' wants to connect to VPN 22A or 22C, the situation becomes more difficult. In prior art, there are no general interdomain VPN configuration procedures.

If the operator of domain 10E has information about the entire network "map" of Fig. 1, including possible links within and between different domains, a path to the requested VPN 22A or 22C can be found. However, in a network having a dynamic topology, i.e. where the number of domains and/or connections between domains and/or connections within the domains are changing quite often, the efforts to keep all parties informed about the present topology may become quite extensive. For instance, information about a change may e.g. be on its way, when a connection path is decided on according to old topology information. In most practical cases, a connection path according to prevailing topology situation has to be found.

One basic idea of the present invention is to find a first sufficient connection path to the requested VPN as fast as possible. Any reconfiguring or additional configuring can then be performed at a later occasion. An information request about the requested VPN has to be spread through the communication network domains, and path information should be returned as fast as possible. In the present invention, the information request is forwarded to adjacent domains, at least when no adequate information is available in the domain. Any replies are then returned basically along the same path as the request was sent.

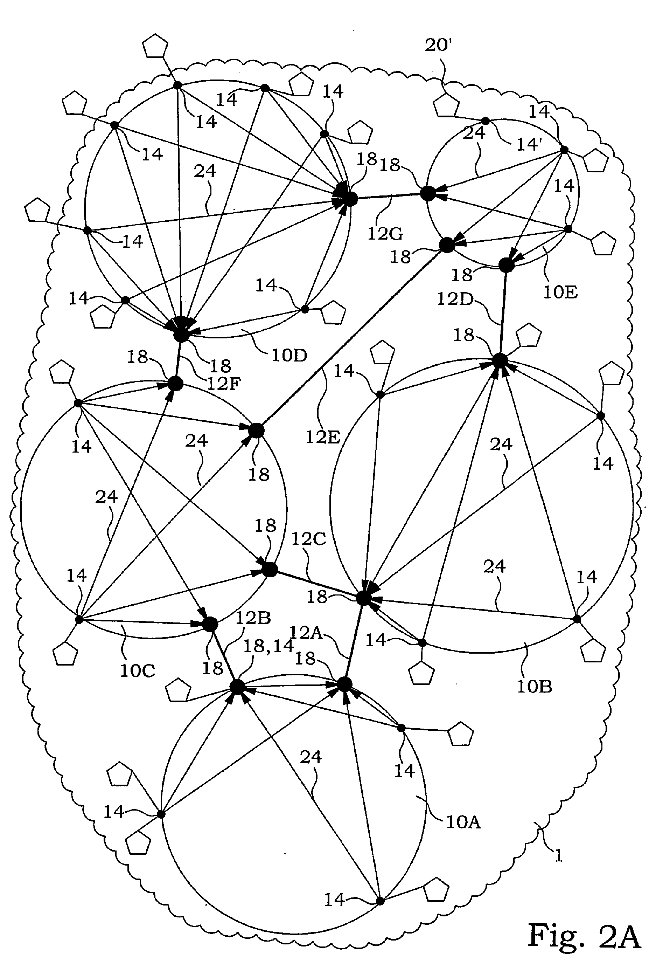

First, a few examples are described, illustrating how domain information can be collected. This is made in connection to Figs. 2A-3D. The main inventive ideas then follows.

Fig. 2A illustrates an embodiment of an initial phase of providing domain VPN information. Each VPN edge node 14 has stored information reflecting its own present VPN configuration regarding at least which VPN's that have connected customer sites at that particular VPN edge node 14. In particular embodiments, the VPN edge node 14 has information also about which customers that are connected to the VPN edge node 14 and associations between the present VPN's and customer sites 20. In some embodiments, information, such as VPN address space and address type (local or global), VPN quality of service classes, specified by requirements such as bandwidth, delay and jitter, and/or VPN set-up, i.e. use of tunnels or filters is provided. Also information such as encryption properties, transparency layer properties, tunnelling properties and topology properties can be included. Furthermore, the VPN border nodes 18 have stored information about the identity of the VPN provider domain it belongs to.

According to one embodiment of the present invention, the domain VPN information stored in each VPN edge node 14, or at least parts thereof, is collected by each border node 18 in the same domain 10A-E. This is visualised in Fig. 2A as arrows, of which some are provided with reference number 24. In such a way, the collective domain node information for the own domain is available in each VPN border node 18 of each domain 10A-E. One alternative for the communication is to use a communication protocol similar to BGP (Border Gateway Protocol), spreading the information all over the domain without any particular knowledge about where the need for information is. The border nodes may then pick up all necessary information. This is an example of a push mechanism for distributing domain VPN information.

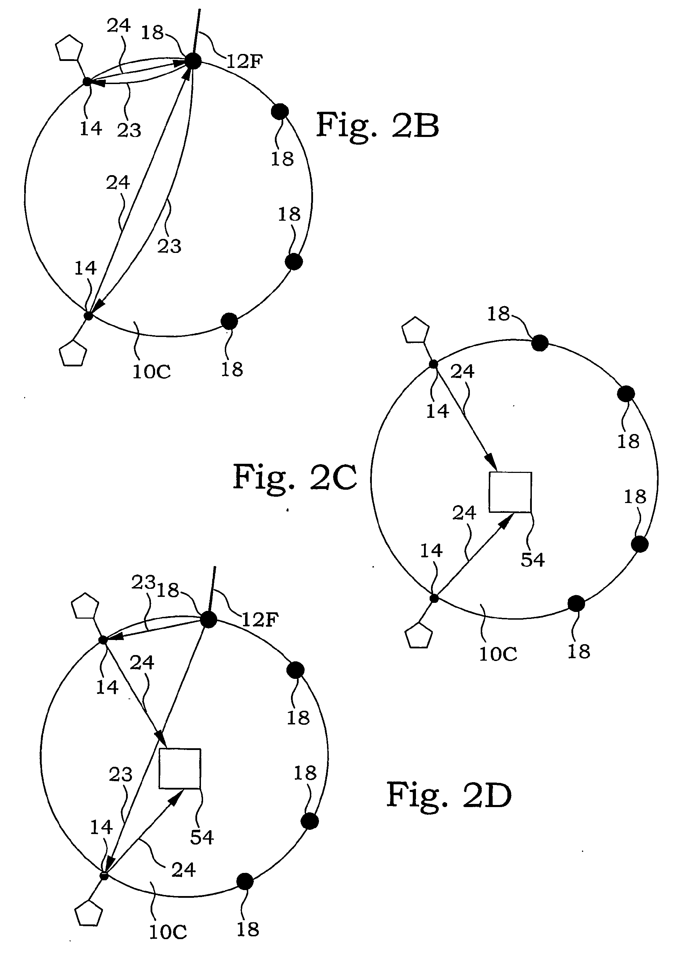

Fig. 2B illustrates another embodiment for providing domain VPN information, now concentrated to one domain 10C. If the VPN border nodes 18 has stored information about which edge nodes 14 that are present in the same domain 10C, the VPN border node 18 can simply request 23 any VPN edge node 14 to return its domain node information 24. In the most simple form of requesting information, the request itself could be a question if the VPN edge node 14 is associated to a certain VPN or not, e.g. received by the domain interconnection 12F. An acknowledgement message will in such a case not comprise any information as such, but will implicitly transfer information of this particular VPN at that particular VPN edge node. This is an example of a pull mechanism for distributing domain VPN information.

The domain VPN information can also be collected with different timing. One alternative is to continuously or at least regularly collect such information to the border nodes in order to assure that the available information always is updated. In such embodiments, the information is preferably stored in the border nodes or in any other node where it is retrievable from the border node, see embodiments described further below. Another alternative is that the information collection is triggered by some event. This event could e.g. be a broadcasting message from an edge node that there is a change of some kind or, as being described above, a request for finding a particular VPN. If all edge nodes have knowledge about which border nodes that are available in the domain, the information could also be sent directly to all border nodes when such a change occurs. In case the information is searched as triggered by a request to find a certain VPN, the collected information may be restricted to that VPN and may not even necessarily be stored for later use.

Fig. 2C illustrates an embodiment, where the domain VPN information is collected in a centralised manner. A storage 54 is provided to store all domain VPN information 24 provided by the different edge nodes 14. Any functionalities using such domain VPN information can the retrieve this information from the central storage 54.

Fig. 2D illustrates another embodiment based on a centralised collection of domain VPN data. Here, a request 23 or other external signal can initialise the provision of VPN data 24 to the storage 54. This request 23 does not necessarily have to come from the storage itself 54.

As an alternative to collect domain VPN information among the domain nodes, the domain VPN information may instead be provided by retrieving data from a data storage. This stored data could e.g. be the result of a previous collection of data according to the procedures above, or could be provided from elsewhere.

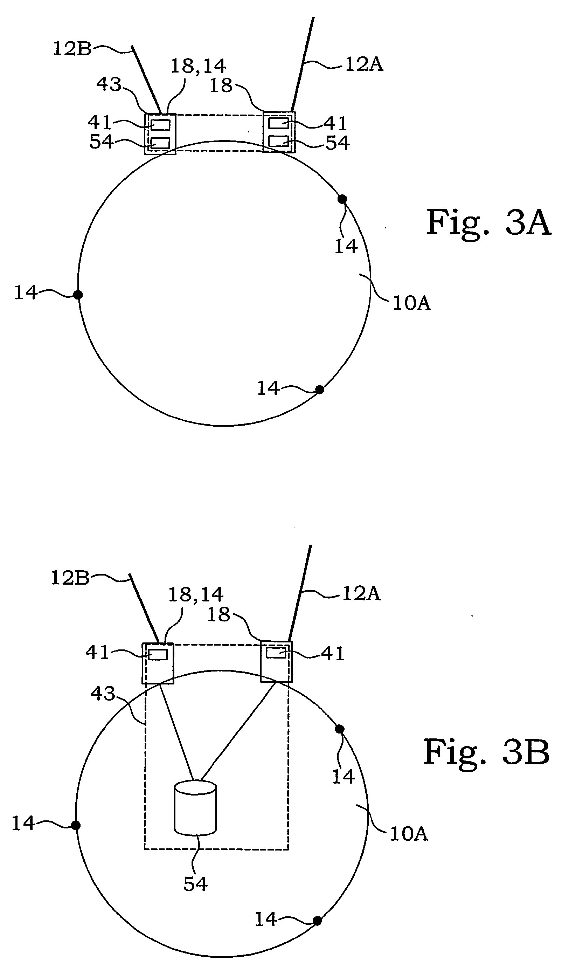

In the previously described embodiment, the provision of data within a domain is executed by the border nodes or a node in direct association therewith. Such a situation is also illustrated in Fig. 3A. Here, one domain 10A in a multidomain system is illustrated more in detail. The border nodes 18 are responsible for the data traffic to and from other domains by the data connections 12A and 12B. The border nodes 18 comprise in this particular embodiment means 41 for collecting domain VPN information, in the form of e.g. software functionality in the processors of the border node 18. The domain VPN information can be stored in a storage 54. A VPN control node 43 for handling domain VPN information regarding the domain as a whole is thus in this particular embodiment implemented as a distribution of local means 41 at every border node 18.

In Fig. 3B, another particular embodiment is illustrated. Here, the border nodes 18 still comprise functionality entities 41 involved with domain VPN information. However, a distributed VPN control node 43 comprises in this particular embodiment means 41 for providing domain VPN information situated in or in connection with the border nodes 18 and a central database 54. In the central database 54, the actual updated and preferably also historical VPN information is stored.

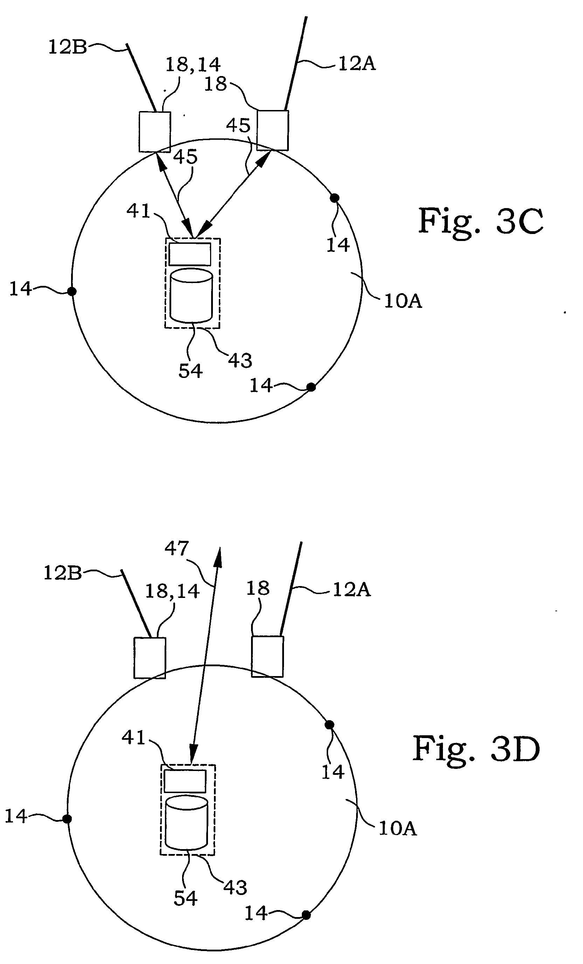

In Fig. 3C, yet another particular embodiment is illustrated. Here, the VPN control node 43 is centralised and comprises the means 41 for providing domain VPN information and the central database 54 basically provided at the same location. The border nodes 18 are in this particular embodiment merely used for handling communications 45 between the VPN control node and neighbouring domains. Functionalities in the border nodes 18 regarding control signalling associated with the actual data traffic can in such a way be utilised also to signal control messages concerning VPN configuration.

In Fig. 3D, an embodiment having a VPN control node 43 that is virtually separated from the border nodes in the system is illustrated. The VPN control node 43 is in such an embodiment connected to VPN control nodes in other domains by dedicated VPN control signal connections 47, creating a high-level network of its own.

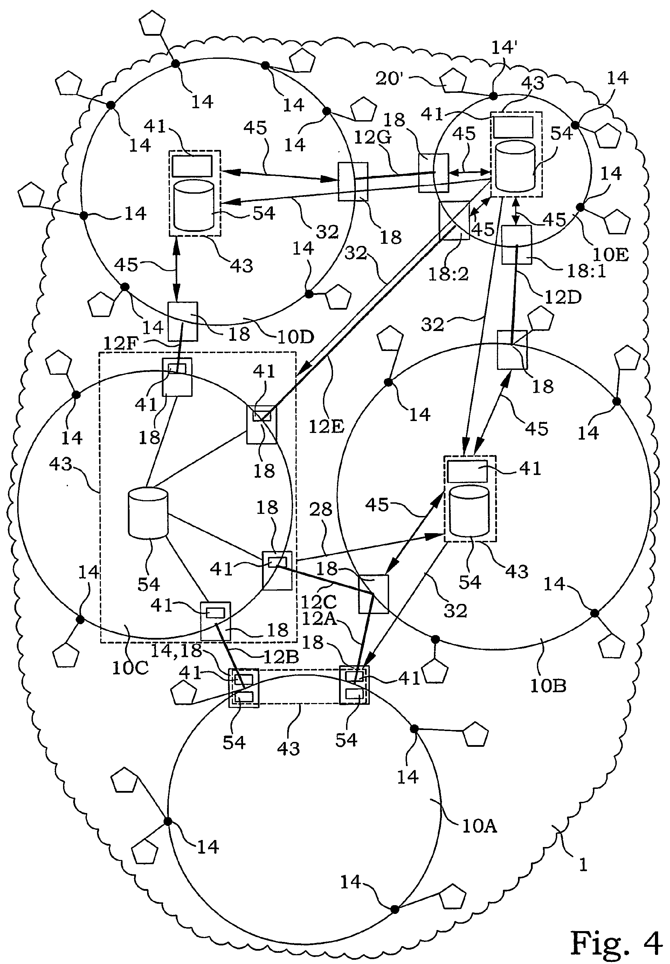

A particular embodiment of the present invention is illustrated in Fig. 4. The first step is provision of VPN information within each domain. This is performed by a VPN control node 43 in each domain. However, the configuration of the VPN control nodes 43 may differ between the different domains. In Fig. 4 it is indicated that domain 10A has a VPN control node 43 similar to the example shown in Fig. 3A, domain 10C has a VPN control node 43 similar to the example shown in Fig. 3B and domains 10B, 10D and 10E have VPN control nodes 43 similar to the example shown in Fig. 3C. The VPN control nodes 43 now only have information about its own domain VPN's. When the VPN control node 43 initiates a connect request of the VPN control node 43 of its own domain 10E, it does only have the information about VPNs in the own domain readily available in its own databases. However, the VPN control node 43 knows what domains it is connected to and sends instead an information request over the interdomain connection 12A-G to the neighbouring, adjacent domains, concerning information about any existence of the requested VPN. This is illustrated by the arrows 32. A VPN control node 43 receiving such information request over an interdomain connection investigates its own databases of domain VPN information to see if there are any data of interest. If the comparison finds any connection path information for the requested VPN, such connection path information is returned to the domain sending the request.

If not, a forwarding over an interdomain connection to a further adjacent domain will take place, initiating subsequent comparing, returning and forwarding actions until information about the requested VPN is achieved. The request is thus spread over the communications network in a cascaded manner, one step at a time. However, preferably, the further forwarding is subjected to further conditions, as described further below. The information that eventually is found will then be brought back to the VPN control node of the original domain 10E. This returning of connection path information follows preferably the same path as the information request was delivered, but in the opposite direction. In an alternative embodiment, the returning of connection path information can be performed in a similar manner as the request, i.e. the connection path information is returned to adjacent domains. If these domains are not the domain issuing the request, the connection path information is forwarded to further adjacent domains in a cascaded manner until it reaches the original domain.

This particular embodiment has the advantage that not the entire system 1 has to be updated in every single VPN control node 43.

The VPN SLA (c.f. description about Fig. 1) may comprise agreements about how much of the available information that should be made available for the neighbouring domain. In a general case, the VPN control node processes available intradomain VPN information into compiled or processed VPN information that is suitable to return as connection path information to neighbouring domains. If the domains are closely related, e.g. belonging to the same operator, the SLA could involve a total transparency in exchanging domain VPN information. In other cases, the processed information 28 that is transferred between the VPN control nodes 43 may be compiled VPN information, only revealing very basic fact about the individual domain VPNs. The minimum information that has to be sent over the interdomain connections 12A-G in the present embodiment is if the requested VPN is available somewhere beyond the border node or domain that returns the information.

The information 28 returned on the interdomain connections 12A-G causes an update or extension of the total available VPN information situation at the VPN control node receiving this reply. The VPN information is thereby extended by connection path information returned by the further adjacent domain. This VPN control node now also has information e.g. of what VPN's that are available via the interdomain connections. If more thorough information is available, the VPN control node may also determine e.g. edge node identities at which these different VPN's are available, VPN quality of service etc. The so achieved VPN information is now a property of the neighbour or adjacent domain and can, if allowed by the SLA, be used for activities in that domain. The information stored in the storage 54 of the VPN control node 43 could be identical to the information received from the neighbouring domain or a processed version thereof, adding, removing or modifying the received information. For instance, the information could be labelled with an indication from what domain it originated from.

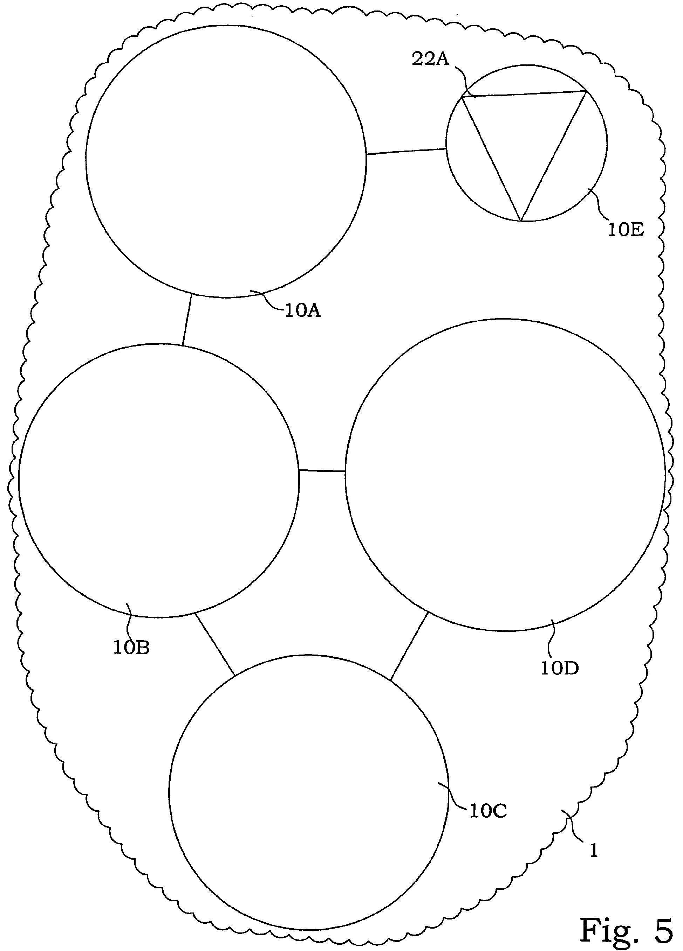

As mentioned above, there is preferably a limitation of further forwarding of information requests. In Fig. 5, a situation potentially giving a risk for endless loops of information requests is illustrated. A communications network 1 comprises five domains 10A-E. In domain 10E, a VPN 22A is available. Now, consider a situation, where a customer of domain 10A wants to connect to VPN 22A. Domain 10A has no internal information about that VPN and creates and sends an information request to both its adjacent domains 10B and 10E. From the domain 10E, a reply is achieved, giving necessary information for initiating a configuring of a connection to the VPN 22A.

However, in domain 10B, no information about VPN 22A is available. The information request is therefore forwarded to the further adjacent domains 10C and 10D. None of these domains have any information about VPN 22A, and another forwarding of the information request is performed. Domain 10C sends the request to the domain 10D and the domain 10D sends the request to the domain 10C. The procedure continues, and an endless loop of information requests will circulate between domains 10B-D. In a preferred embodiment of the present invention, means for prohibiting the information requests to be forwarded in endless loops are provided. Such means for prohibiting looping of information requests are preferably provided in connection with sending or receiving of such information requests, i.e. they are arranged either to prohibit the actual forwarding to a new adjacent domain or to prohibit the acceptance of a received information request. Several embodiments of posing restrictions on forwarding are possible. Some of them are briefly mentioned here below.

In one embodiment of a loop prohibiting arrangement, each original information request is provided with an identity. This identity could e.g. be a separate field having a certain unique identity number. Identities of information requests received and accepted by a domain are stored in a storage. When a new information request arrives, a comparison is made with the stored data to reveal if the information request already has been received before. In such a case, the request is neglected. Otherwise the request is accepted and the identity is added to the storage.

The identity of the request could also be composed by the identity of the originally requesting domain and the identity of the requested VPN. In such a case, no separate request identity is necessary. However, in such a case, the storage of received information requests should be associated with a certain life-time, so that new requests for the same domain-VPN pair can be allowed after a certain time.

The comparison could also be performed in connection with the actual forwarding of the request. In such a case, the request identity could be stored in the storage and an extra condition for forwarding the request could be that there should not be two identical request identities within the database.

Another embodiment for loop prohibiting is based on information about forwarding paths. By adding information in the request itself about which domains that are passed during the forwarding process, a receiving domain can easily search for its own identity among this information. If the own identity is present, the request is neglected. Otherwise, the own identity is added and the request can be forwarded. The comparison can also be made at the sending side. Before forwarding a request to a domain, the sending domain searches the forwarding path information for the identities of its adjacent domains. For domains which already are present in the forwarding path, forwarding is prohibited.

Yet another embodiment is based on life-time. A certain life-time can be set when creating the original information request, e.g. by fixing a validity expiration time. When receiving and/or forwarding a request, this validity expiration time is checked against e.g. a system time, and when the validity is expired, no more forwarding is performed. A variation of the lime-time concept is to set a remaining life-time, which then is reduced in connection to each forwarding. When the remaining life-time vanishes, no more forwardings are performed. This approach can then also be used, utilising the number of forwardings as a measure of "time", i.e. it is stated from the initialisation that a maximum number of forwardings is allowed. For each forwarding, the remaining number is reduced by one unit.

The process of finding a connection path to a certain VPN is typically used for configuring a new connection to the VPN. The returned information is typically used for during this configuration. If the returned connection path information comprises full information about the path, the configuration can be performed straightforward. If the connection path information just reveals the mere existence of a VPN beyond a certain adjacent domain, also the configuration has to be performed in one domain at a time.

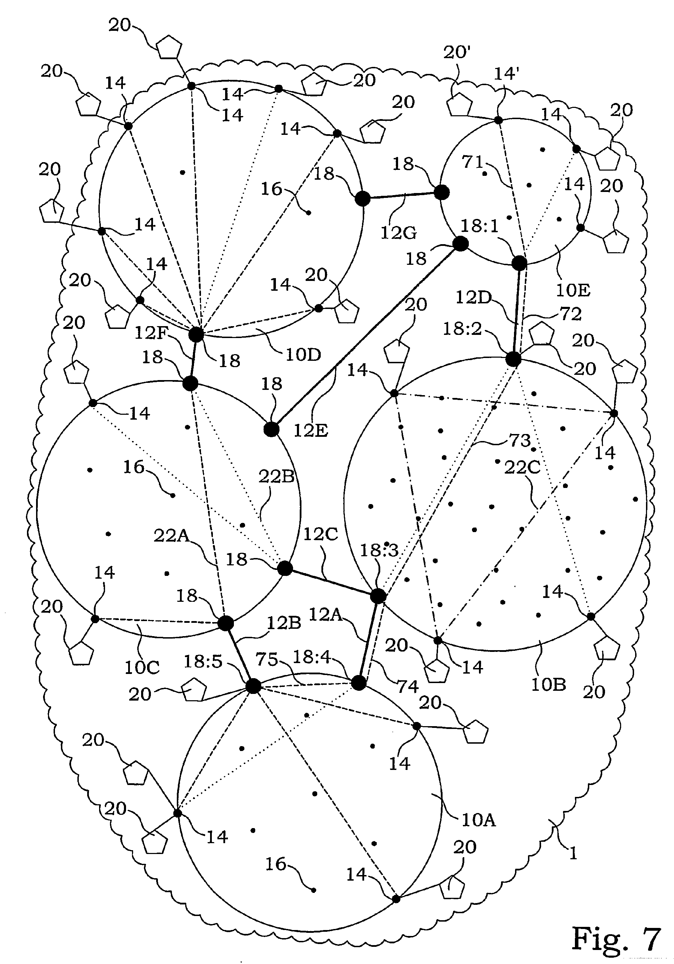

An example, illustrated in Fig. 7, shows how the configuration of an interdomain VPN can be performed. A new customer site 20' in the domain 10E shall be connected to VPN 22A. It is assumed that VPN tunnels are used for VPN connections both inside domains and between domains. The following steps are taken.

The VPN control node in domain 10E gets connection path information that a connection can be set up to the VPN via the "nexthop" 10B. No further information is available. The VPN control node in domain 10E sets up a VPN tunnel 71 for VPN 22A from the edge node 14' where the customer site 20' is connected, to the border node 18:1, which is connected to domain 10B via link 12D. The VPN control node in domain 10E initiates communication with the VPN control node in domain 10B and sets up a VPN tunnel 72 for VPN 22A over the link 12D to border node 18:2. Since VPN 22A is not present in domain 10B, the VPN control node in domain 10B checks its VPN database and sees that VPN 22A can be found at "nexthop" 10A and 10C.

The VPN control node in domain 10B chooses to set up the VPN via the "nexthop" 10A only. It sets up a VPN transit tunnel 73 for VPN 22A from the border node 18:2, which is connected to domain 10B via link 12D, to the border node 18:3, which is connected to domain 10A via link 12A. The VPN control node in domain 10B initiates communication with the control node in domain 10A and sets up a VPN tunnel 74 over the link 12A to border node 18:4. Since VPN 22A is present in domain 10A, the control node in domain 10A can set up an internal tunnel 75 from the border node, which is connected to domain 10B via link 12A, to the border node 18:5, which is connected to the VPN 22A.

As mentioned above, the present invention provides a fast determination of a possible connection path to a VPN. However, this path may not be the optimum one, at least not for all possible situations. In such cases, a later revision of the connection path could be beneficial. If there are alternative paths available, it is likely that subsequent replies defining such alternative paths are provided to the original domain. Furthermore, by letting the information request be forwarded, not only from domains lacking information about the requested VPN, but from all domains, virtually all possible paths will be found and returned to the originating domain.

The originating domain can thereby evaluate this further information about alternative paths, preferably in terms of any connection quality, and can perform any actions based on this. If a better connection path is found, one alternative is to reconfigure the VPN and switch over to the new path instead, leaving the first temporary connection path. Another alternative would be to configure an additional connection.

The functionalities according to the present invention are provided in the different domains. Functionalities for receiving, comparing, returning replies and forwarding are preferably available in all domains that may be subject of a request. Functionalities for creating and sending the original request as well as for performing actual configurations are preferably available in all domains where new nodes could appear. The domain arrangements are typically implemented in VPN control nodes 43 of the domains.

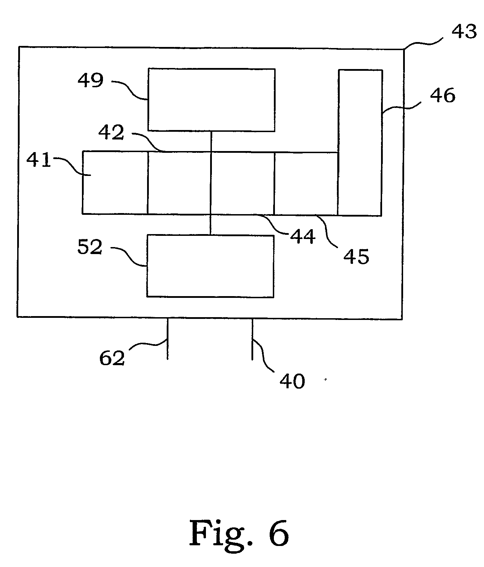

Fig. 6 illustrates a block scheme of a particular embodiment of a relatively general VPN control node 43 according to the present invention providing the connection path finding assistance arrangement. The VPN control node 43 comprises means 52 for providing domain VPN information. This information may be provided by other nodes in the domain by connections 62. A main control communication interface 40 is provided for communication with other domains. This interface 40 may be arranged in combination with the intra-domain connections 62. A receiver 41 is connected to the main control communication interface 40 and is arranged to handle any incoming information requests. The receiver 41 is further arranged to receive any connection path information sent from any further adjacent domain. A matching unit 49 investigating if an identity of a requested VPN matches with domain VPN information is provided, as means for comparing. A transmitter 42 is also connected to the main control communication interface 40 for returning information about any matched connection path information from the matching unit 49 to adjacent domains. This unit is also responsible to forward any reply received from any further adjacent domain backwards in the request chain. A forwarding unit 44 is also provided, which forwards any non-matching request to further adjacent domains. In the present embodiment, also loop-prohibiting functionalities are comprised in this forwarding unit 44. The transmitter 42 and the forwarding unit 44 are preferably implemented in together in one common unit.

For the VPN control node 43 also to function as a request initiating node, an information request unit 45 is provided. Preferably, the forwarding unit 44 is then utilised for sending the information request to an adjacent domain. A configuring machine 46 is provided and arranged to use the received connection path information for initialising a configuration of the VPN connection. This configuring machine 46 preferably comprises means for performing evaluations and configurations of alternative connection paths according to the discussions further above.

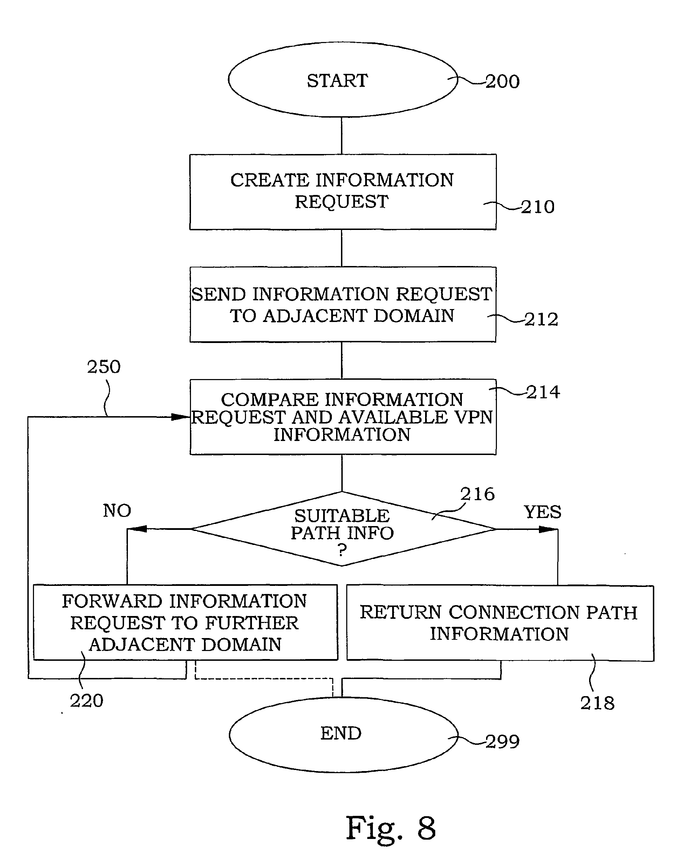

The basic steps of an embodiment of a method according to the present invention are illustrated in Fig. 8. The procedure starts in step 200. In step 210, an information request about any existence of a certain VPN is created. This request concerns connecting a first node in a first domain to a VPN not presently available in the first domain. In step 212, the information request is sent to an adjacent domain. In step 214, the information request is compared with domain VPN information available in the adjacent domain. In step 216, it is decided whether or not suitable connection path information is available or not. If suitable connection path information is available, the process continues to step 218, where connection path information is returned to the domain sending the information request. The procedure ends in step 299. If suitable connection path information is not available, the process continues to step 220, where the information request is forwarded to further adjacent domains. If the forwarding step succedes the procedure returns to step 214, as illustrated by the arrow 250, otherwise the procedure ends in step 299.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. Method for determining a connection path to a virtual private network (22 A-C) - VPN - within a communications network having at least two interconnected domains (10 A-E), from a first node in a first domain to a second node associated with a target VPN not originally available in the first domain, the method comprising the steps of:
sending (212), from a VPN control node of the first domain to a VPN control node of an adjacent domain, an information request about any existence of the target VPN in the adjacent domain, wherein the information request comprises an identity of the target VPN;
comparing (214), by the VPN control node of the adjacent domain, the received information request with the adjacent domain's VPN information available in the VPN control node of the adjacent domain;
returning (218), by the VPN control node of the adjacent domain, to the VPN control node of the first domain, connection path information from the adjacent domain to the first domain, if information about a connection path to the target VPN is present in the domain's VPN information available in the adjacent domain; and
forwarding (220), by the VPN control node of the adjacent domain to a VPN control node of a further adjacent domain, the information request about existence of the target VPN in the further adjacent domain, if information about a connection path to the target VPN is not present in the domain's VPN information available in the VPN control node of the adjacent domain.

2. Method for determining a connection path according to claim 1, wherein comparing, returning and forwarding steps are repeated in further adjacent domains in a cascaded manner, the forwarding step in said further adjacent domains being subjected to further conditions.

3. Method for determining a connection path according to claim 2, wherein the connection path information is returned to the first domain along the same path as the information request was forwarded, but in opposite direction.

4. Method for determining a connection path according to claim 3, wherein the domain VPN information available in a present domain is extended by connection path information returned by a further adjacent domain, whereby extended connection path information from the present domain in turn is returned to a domain providing the information request to the present domain.

5. Method for determining a connection path according to claim 2, wherein the connection path information is returned to the first domain by cascading said connection path information to adjacent domains.

6. Method for determining a connection path according to any of the claims 1 to 5, wherein said step of forwarding also can be performed if information about a connection path to the target VPN is present in the domain VPN information available in the adjacent domain.

7. Method for determining a connection path according to any of the claims 1 to 6, wherein said connection path information comprises information verifying an existence of a possible path between the first node and the target VPN.

8. Method for determining a connection path according to any of the claims 1 to 6, wherein said connection path information comprises information of all links of a possible path between the first node and the target VPN.

9. Method for determining a connection path according to any of the claims 1 to 8, comprising the further steps of prohibiting the information requests to be forwarded in endless loops within the communications network.

10. Method for determining a connection path according to claim 9, wherein the step of prohibiting is performed before forwarding an information request to a further adjacent domain.

11. Method for determining a connection path according to claim 9, wherein the step of prohibiting is performed before accepting a received information request from another domain.

12. Method for determining a connection path according to any of the claim 9 to 11, wherein the step of prohibiting is based on a comparison between the present information request and a storage of data representing earlier information requests.

13. Method for determining a connection path according to any of the claim 9 to 11, wherein the step of prohibiting is based on a comparison between domain identities and data representing domains that the received information request has passed, comprised in the information request.

14. Method for determining a connection path according to any of the claim 9 to 11, wherein the step of prohibiting is based on a life-time of the information request.

15. Method for configuring a multi-domain virtual private network, comprising the steps of:
determining a connection path according to any of the claims 1 to 14; and
configuring a connection of the first node to the target VPN along the connection path of the information returned to the first domain.

16. Method for configuring, according to claim 15, further comprising the steps of:
obtaining further information about an alternative connection path from the adjacent domain after the configuring step is performed;
evaluating a connection quality of the alternative connection path in relation to a connection quality of the configured connection path;
reconfiguring the connection of the first node to the target VPN along the alternative connection path, if the connection quality of the alternative connection path is higher than the connection quality of the originally configured connection path.

17. Method for configuring, according to claim 15, further comprising the steps of:
obtaining further information about an alternative connection path from the adjacent domain after the configuring step is performed;
configuring an additional connection of the first node to the target VPN along the alternative connection path.

18. Communications network domain arrangement for assisting in providing a connection path to a virtual private network (22 A-C) - VPN - within a communications network having at least two interconnected domains (10 A-E), of which one is said communications network domain, from a first node in a first domain to a second node associated with a target VPN not originally available in the first domain, comprising:
means (41) for receiving an information request about any existence of the target VPN from a VPN control node of the first domain; and
means (49) for comparing the information request with domain's VPN information available in the communications network domain;
means (42) for returning connection path information to the VPN control node of the first domain, if information about a connection path to the target VPN is present in the domain's VPN information available in the communications network domain; and
means (44) for forwarding the information request about existence of the target VPN from the communications network domain to a VPN control node of a further domain, if information about a connection path to the target VPN is not present in the domain's VPN information available in the communications network domain.

19. Communications network domain arrangement according to claim 18, wherein said means for forwarding is arranged to perform said forwarding also if information about a connection path to the target VPN is present in the domain VPN information available in the communications network domain.

20. Communications network domain arrangement according to claim 18 or 19, further comprising:
means for receiving connection path information from the further domain;
and
means for extending the received connection path information with information about the communications network domain;
whereby the means for returning connection path information being further arranged for forwarding the extended connection path information to the first domain.

21. Communications network domain arrangement according to any of the claims 18 to 20, wherein said connection path information comprises information of all links of a possible path between the first node and the target VPN.

22. Communications network domain arrangement according to any of the claims 18 to 21, further comprising means for prohibiting the information requests to be forwarded in endless loops within the communications network.

23. Communications network (1), comprising:
at least one network domain arrangement according to any of the claims 18 to 22; and
at least one network domain comprising:
means for creating an information request about any existence of the target VPN;
means for sending the information request to an adjacent domain of the communications network domain having the network domain arrangement according to any of the claims 18 to 22;
means for receiving returned connection path information to the target VPN from the adjacent domain; and
means for configuring a connection of the first node to the target VPN along the connection path of the information returned from the adjacent domain.

24. Communications network according to claim 23, wherein the means for receiving returned connection path information is further arranged for obtaining further information about an alternative connection path from the adjacent domain, whereby said communications network domain arrangement further comprises:
means for evaluating a connection quality of the alternative connection path in relation to a connection quality of a configured connection path;
the means for configuring being further arranged for reconfiguring the connection of the first node to the target VPN along the alternative connection path, if the connection quality of the alternative connection path is higher than the connection quality of the originally configured connection path.

25. Communications network according to claim 23, wherein
the means for receiving returned connection path information is further arranged for obtaining further information about an alternative connection path from the adjacent domain;
whereby the means for configuring being further arranged for configuring an additional connection of the first node to the target VPN along the alternative connection path.

## Patentansprüche

1. Verfahren zum Bestimmen eines Verbindungswegs zu einem virtuellen privaten Netzwerk (22 A-C) - VPN - innerhalb eines Kommunikationsnetzwerks mit mindestens zwei miteinander verbundenen Domains (10 A-E), und zwar von einem ersten Knoten in einer ersten Domain zu einem zweiten Knoten, der einem Ziel-VPN zugeordnet ist, das ursprünglich in der ersten Domain nicht verfügbar ist, wobei das Verfahren die Schritte umfasst:
von einem VPN-Steuerungsknoten der ersten Domain an einen VPN-Steuerungsknoten einer benachbarten Domain erfolgendes Senden (212) einer Informationsanfrage über eine Existenz des Ziel-VPN in der benachbarten Domain, worin die Informationsanfrage eine Identität des Ziel-VPN umfasst;
durch den VPN-Steuerungsknoten der benachbarten Domain erfolgendes Vergleichen (214) der empfangenen Informationsanfrage mit der VPN-Information der benachbarten Domain, die im VPN-Steuerungsknoten der benachbarten Domain verfügbar ist;
durch den VPN-Steuerungsknoten der benachbarten Domain zum VPN-Steuerungsknoten der ersten Domain erfolgendes Zurücksenden (218) von Verbindungsweginformation von der benachbarten Domain zur ersten Domain, wenn in der Domain-VPN-Information, die in der benachbarten Domain verfügbar ist, Information über einen Verbindungsweg zum Ziel-VPN vorliegt; und
durch den VPN-Steuerungsknoten der benachbarten Domain zu einem VPN-Steuerungsknoten einer weiteren benachbarten Domain erfolgendes Weiterleiten (220) der Informationsanfrage über die Existenz des Ziel-VPN in der weiteren benachbarten Domain, wenn in der Domain-VPN-Information, die im VPN-Steuerungsknoten der benachbarten Domain verfügbar ist, keine Information über einen Verbindungsweg zum Ziel-VPN vorliegt.

2. Verfahren zum Bestimmen eines Verbindungswegs nach Anspruch 1, worin die Vergleichs-, Zurücksende- und Weiterleitungsschritte in weiteren benachbarten Domains auf kaskadierte Weise wiederholt werden, wobei der Weiterleitungsschritt in den weiteren benachbarten Domains weiteren Bedingungen unterliegt.

3. Verfahren zum Bestimmen eines Verbindungswegs nach Anspruch 2, worin die Verbindungsweginformation entlang des gleichen Wegs zur ersten Domain zurückgesendet wird, wie die Informationsanfrage weitergeleitet wurde, aber in entgegengesetzter Richtung.

4. Verfahren zum Bestimmen eines Verbindungswegs nach Anspruch 3, worin die in einer vorliegenden Domain verfügbare Domain-VPN-Information mit Verbindungsweginformation erweitert wird, die durch eine weitere benachbarte Domain zurückgesendet wurde, wodurch erweiterte Verbindungsweginformation aus der vorliegenden Domain wiederum zu einer Domain zurückgesendet wird, welche die Informationsanfrage an die vorliegende Domain liefert.

5. Verfahren zum Bestimmen eines Verbindungswegs nach Anspruch 2, worin die Verbindungsweginformation durch Kaskadieren der Verbindungsweginformation zu benachbarten Domains zur ersten Domain zurückgesendet wird.

6. Verfahren zum Bestimmen eines Verbindungswegs nach einem der Ansprüche 1 bis 5, worin der Schritt des Weiterleitens auch durchgeführt werden kann, wenn in der Domain-VPN-Information, die in der benachbarten Domain verfügbar ist, Information über einen Verbindungsweg zum Ziel-VPN vorliegt.

7. Verfahren zum Bestimmen eines Verbindungswegs nach einem der Ansprüche 1 bis 6, worin die Verbindungsweginformation Information umfasst, die eine Existenz eines möglichen Wegs zwischen dem ersten Knoten und dem Ziel-VPN bestätigt.

8. Verfahren zum Bestimmen eines Verbindungswegs nach einem der Ansprüche 1 bis 6, worin die Verbindungsweginformation Information über alle Verbindungsstrecken eines möglichen Wegs zwischen dem ersten Knoten und dem Ziel-VPN umfasst.

9. Verfahren zum Bestimmen eines Verbindungswegs nach einem der Ansprüche 1 bis 8, den weiteren Schritt umfassend: Unterbinden, dass die Informationsanfragen innerhalb des Kommunikationsnetzwerks in Endlosschleifen weitergeleitet werden.

10. Verfahren zum Bestimmen eines Verbindungswegs nach Anspruch 9, worin der Schritt des Unterbindens vor dem Weiterleiten einer Informationsanfrage zu einer weiteren benachbarten Domain durchgeführt wird.

11. Verfahren zum Bestimmen eines Verbindungswegs nach Anspruch 9, worin der Schritt des Unterbindens vor dem Entgegennehmen einer empfangenen Informationsanfrage von einer anderen Domain durchgeführt wird.

12. Verfahren zum Bestimmen eines Verbindungswegs nach einem der Ansprüche 9 bis 11, worin der Schritt des Unterbindens auf einem Vergleich zwischen der vorliegenden Informationsanfrage und einem Speicher von Daten, die frühere Informationsanfragen darstellen, beruht.

13. Verfahren zum Bestimmen eines Verbindungswegs nach einem der Ansprüche 9 bis 11, worin der Schritt des Unterbindens auf einem Vergleich zwischen Domain-Identitäten und in der Informationsanfrage enthaltenen Daten beruht, die Domains darstellen, welche die empfangene Informationsanfrage durchlaufen hat.

14. Verfahren zum Bestimmen eines Verbindungswegs nach einem der Ansprüche 9 bis 11, worin der Schritt des Unterbindens auf einer Lebensdauer der Informationsanfrage beruht.

15. Verfahren zum Konfigurieren eines virtuellen privaten Netzwerks über mehrere Domains, die Schritte umfassend:
Bestimmen eines Verbindungswegs nach einem der Ansprüche 1 bis 14; und
Konfigurieren einer Verbindung vom ersten Knoten zum Ziel-VPN entlang des Verbindungswegs der zur ersten Domain zurückgesendeten Information.

16. Verfahren zum Konfigurieren nach Anspruch 15, ferner die Schritte umfassend:
Erlangen weiterer Information über einen alternativen Verbindungsweg von der benachbarten Domain, nachdem der Konfigurationsschritt durchgeführt wird;
Bewerten einer Verbindungsqualität des alternativen Verbindungswegs in Bezug auf eine Verbindungsqualität des konfigurierten Verbindungswegs;
Umkonfigurieren der Verbindung des ersten Knotens zum Ziel-VPN entlang des alternativen Verbindungswegs, wenn die Verbindungsqualität des alternativen Verbindungswegs höher als die Verbindungsqualität des ursprünglich konfigurierten Verbindungswegs ist.

17. Verfahren zum Konfigurieren nach Anspruch 15, ferner die Schritte umfassend:
Erlangen weiterer Information über einen alternativen Verbindungsweg von der benachbarten Domain, nachdem der Konfigurationsschritt durchgeführt wird;
Konfigurieren einer zusätzlichen Verbindung des ersten Knotens zum Ziel-VPN entlang des alternativen Verbindungswegs.

18. Kommunikationsnetzwerkdomain-Anordnung zur Unterstützung beim Bereitstellen eines Verbindungswegs zu einem virtuellen privaten Netzwerk (22 A-C)-VPN - innerhalb eines Kommunikationsnetzwerks mit mindestens zwei miteinander verbundenen Domains (10 A-E), von denen eine die Kommunikationsnetzwerkdomain ist, und zwar von einem ersten Knoten in einer ersten Domain zu einem zweiten Knoten, der einem Ziel-VPN zugeordnet ist, das ursprünglich in der ersten Domain nicht verfügbar ist, umfassend:
Mittel (41) zum Empfangen einer Informationsanfrage über eine Existenz des Ziel-VPN von einem VPN-Steuerungsknoten der ersten Domain;
Mittel (49) zum Vergleichen der Informationsanfrage mit Domain-VPN-Information, die in der Kommunikationsnetzwerkdomain verfügbar ist;
Mittel (42) zum Zurücksenden von Verbindungsweginformation zur VPN-Steuerungsknoten der ersten Domain, wenn in der Domain-VPN-Information, die in der Kommunikationsnetzwerkdomain verfügbar ist, Information über einen Verbindungsweg zum Ziel-VPN vorliegt; und
Mittel (44) zum Weiterleiten der Informationsanfrage über die Existenz des Ziel-VPN von der Kommunikationsnetzwerkdomain zum VPN-Steuerungsknoten einer weiteren Domain, wenn in der Domain-VPN-Information, die in der Kommunikationsnetzwerkdomain verfügbar ist, keine Information über einen Verbindungsweg zum Ziel-VPN vorliegt.

19. Kommunikationsnetzwerkdomain-Anordnung nach Anspruch 18, worin die Mittel zum Weiterleiten dafür eingerichtet sind, das Weiterleiten auch durchzuführen, wenn in der Domain-VPN-Information, die in der Kommunikationsnetzwerkdomain verfügbar ist, Information über einen Verbindungsweg zum Ziel-VPN vorliegt.

20. Kommunikationsnetzwerkdomain-Anordnung nach einem der Ansprüche 18 oder 19, ferner umfassend:
Mittel zum Empfangen von Verbindungsweginformation von der weiteren Domain; und
Mittel zum Erweitern der empfangenen Verbindungsweginformation mit Information über die Kommunikationsnetzwerkdomain;
wodurch die Mittel zum Zurücksenden von Verbindungsweginformation ferner zum Weiterleiten der erweiterten Verbindungsweginformation zu ersten Domain eingerichtet sind.

21. Kommunikationsnetzwerkdomain-Anordnung nach einem der Ansprüche 18 bis 20, worin die Verbindungsweginformation Information über alle Verbindungsstrecken eines möglichen Wegs zwischen dem ersten Knoten und dem Ziel-VPN umfasst.

22. Kommunikationsnetzwerkdomain-Anordnung nach einem der Ansprüche 18 bis 21, ferner Mittel zum Unterbinden, dass die Informationsanfragen innerhalb des Kommunikationsnetzwerks in Endlosschleifen weitergeleitet werden.

23. Kommunikationsnetzwerk (1), umfassend:
mindestens eine Kommunikationsnetzwerkdomain-Anordnung nach einem der Ansprüche 18 bis 22; und
mindestens eine Netzwerkdomain, umfassend:
Mittel zum Erzeugen einer Informationsanfrage über eine Existenz des Ziel-VPN;
Mittel zum Senden der Informationsanfrage an eine benachbarte Domain der Kommunikationsnetzwerkdomain, welche die Kommunikationsnetzwerkdomain-Anordnung nach einem der Ansprüche 18 bis 22 hat;
Mittel zum Empfangen zurückgesendeter Verbindungsweginformation zum Ziel-VPN von der benachbarten Domain; und
Mittel zum Konfigurieren einer Verbindung des erstens Knotens zum Ziel-VPN entlang des Verbindungswegs der von der benachbarten Domain zurückgesendeten Information.

24. Kommunikationsnetzwerk nach Anspruch 23, worin die Mittel zum Empfangen zurückgesendeter Verbindungsweginformation ferner zum Erlangen weiterer Information über einen alternativen Verbindungsweg von der benachbarten Domain eingerichtet sind, wobei die Kommunikationsnetzwerkdomain-Anordnung ferner umfasst:
Mittel zum Bewerten einer Verbindungsqualität des alternativen Verbindungswegs in Bezug auf eine Verbindungsqualität eines konfigurierten Verbindungswegs;
wobei die Mittel zum Konfigurieren ferner zum Umkonfigurieren der Verbindung des ersten Knotens zum Ziel-VPN entlang des alternativen Verbindungswegs, wenn die Verbindungsqualität des alternativen Verbindungswegs höher als die Verbindungsqualität des ursprünglich konfigurierten Verbindungswegs ist, eingerichtet sind.

25. Kommunikationsnetzwerk nach Anspruch 23, worin:
die Mittel zum Empfangen zurückgesendeter Verbindungsweginformation ferner zum Erlangen weiterer Information über einen alternativen Verbindungsweg von der benachbarten Domain eingerichtet sind;
wodurch die Mittel zum Konfigurieren ferner zum Konfigurieren einer zusätzlichen Verbindung des ersten Knotens zum Ziel-VPN entlang des alternativen Verbindungswegs eingerichtet sind.

## Revendications

1. Procédé de détermination d'un chemin de connexion à un réseau privé virtuel (22 A-C) - VPN - au sein d'un réseau de communication présentant au moins deux domaines interconnectés (10 A-E), d'un premier noeud dans un premier domaine à un second noeud associé à un réseau VPN cible indisponible initialement dans le premier domaine, le procédé comprenant les étapes ci-dessous consistant à :
envoyer (212), d'un noeud de commande de réseau VPN du premier domaine à un noeud de commande de réseau VPN d'un domaine adjacent, une demande d'informations concernant une quelconque existence du réseau VPN cible dans le domaine adjacent, dans lequel la demande d'informations comprend une identité du réseau VPN cible ;
comparer (214), par le biais du noeud de commande de réseau VPN du domaine adjacent, la demande d'informations reçue à des informations de réseau VPN du domaine adjacent disponibles dans le noeud de commande de réseau VPN du domaine adjacent ;
renvoyer (218), par le biais du noeud de commande de réseau VPN du domaine adjacent, au noeud de commande de réseau VPN du premier domaine, des informations de chemin de connexion du domaine adjacent au premier domaine, si des informations concernant un chemin de connexion au réseau VPN cible sont présentes dans les informations de réseau VPN du domaine disponibles dans le domaine adjacent ; et
acheminer (220), par le biais du noeud de commande de réseau VPN du domaine adjacent, vers un noeud de commande de réseau VPN d'un domaine adjacent supplémentaire, la demande d'informations concernant l'existence du réseau VPN cible dans le domaine adjacent supplémentaire, si des informations concernant un chemin de connexion au réseau VPN cible ne sont pas présentes dans les informations de réseau VPN du domaine disponibles dans le noeud de commande de réseau VPN du domaine adjacent.

2. Procédé de détermination d'un chemin de connexion selon la revendication 1, dans lequel les étapes de comparaison, de renvoi et d'acheminement sont répétées dans des domaines adjacents supplémentaires d'une manière en cascade, l'étape d'acheminement dans lesdits domaines adjacents supplémentaires étant soumise à des conditions supplémentaires.

3. Procédé de détermination d'un chemin de connexion selon la revendication 2, dans lequel les informations de chemin de connexion sont renvoyées au premier domaine le long du même chemin que celui par lequel la demande d'informations a été acheminée, mais en sens inverse.

4. Procédé de détermination d'un chemin de connexion selon la revendication 3, dans lequel les informations de réseau VPN de domaine disponibles dans un domaine en cours sont prolongées avec des informations de chemin de connexion renvoyées par un domaine adjacent supplémentaire, moyennant quoi des informations de chemin de connexion prolongées à partir du domaine en cours, à leur tour, sont renvoyées à un domaine fournissant la demande d'informations au domaine en cours.

5. Procédé de détermination d'un chemin de connexion selon la revendication 2, dans lequel les informations de chemin de connexion sont renvoyées au premier domaine en cascadant lesdites informations de chemin de connexion vers des domaines adjacents.

6. Procédé de détermination d'un chemin de connexion selon l'une quelconque des revendications 1 à 5, dans lequel ladite étape d'acheminement peut également être mise en oeuvre si des informations concernant un chemin de connexion au réseau VPN cible sont présentes dans les informations de réseau VPN de domaine disponibles dans le domaine adjacent.

7. Procédé de détermination d'un chemin de connexion selon l'une quelconque des revendications 1 à 6, dans lequel lesdites informations de chemin de connexion comportent des informations vérifiant une existence d'un éventuel chemin entre le premier noeud et le réseau VPN cible.

8. Procédé de détermination d'un chemin de connexion selon l'une quelconque des revendications 1 à 6, dans lequel lesdites informations de chemin de connexion comportent des informations de toutes les liaisons d'un éventuel chemin entre le premier noeud et le réseau VPN cible.

9. Procédé de détermination d'un chemin de connexion selon l'une quelconque des revendications 1 à 8, comprenant les étapes supplémentaires consistant à interdire que les demandes d'informations soient acheminées dans des boucles sans fin au sein du réseau de communication.

10. Procédé de détermination d'un chemin de connexion selon la revendication 9, dans lequel l'étape d'interdiction est mise en oeuvre avant d'acheminer une demande d'informations vers un domaine adjacent supplémentaire.

11. Procédé de détermination d'un chemin de connexion selon la revendication 9, dans lequel l'étape d'interdiction est mise en oeuvre avant d'accepter une demande d'informations reçue en provenance d'un autre domaine.

12. Procédé de détermination d'un chemin de connexion selon l'une quelconque des revendications 9 à 11, dans lequel l'étape d'interdiction est basée sur une comparaison entre la demande d'informations en cours et un stockage de données représentant des demandes d'informations antérieures.

13. Procédé de détermination d'un chemin de connexion selon l'une quelconque des revendications 9 à 11, dans lequel l'étape d'interdiction est basée sur une comparaison entre des identités de domaines et des données représentant des domaines franchis par la demande d'informations reçue, incluses dans la demande d'informations.

14. Procédé de détermination d'un chemin de connexion selon l'une quelconque des revendications 9 à 11, dans lequel l'étape d'interdiction est basée sur une durée de vie de la demande d'informations.

15. Procédé de configuration d'un réseau privé virtuel multi-domaine, comprenant les étapes ci-dessous consistant à :
déterminer un chemin de connexion selon l'une quelconque des revendications 1 à 14; et
configurer une connexion du premier noeud au réseau VPN cible le long du chemin de connexion des informations renvoyées au premier domaine.

16. Procédé de configuration selon la revendication 15, comprenant en outre les étapes ci-dessous consistant à :
obtenir des informations supplémentaires concernant un chemin de connexion alternatif à partir du domaine adjacent, suite à la mise en oeuvre de l'étape de configuration ;
évaluer une qualité de connexion du chemin de connexion alternatif par rapport à une qualité de connexion du chemin de connexion configuré ;
reconfigurer la connexion du premier noeud au réseau VPN cible le long du chemin de connexion alternatif, si la qualité de connexion du chemin de connexion alternatif est supérieure à la qualité de connexion du chemin de connexion initialement configuré.

17. Procédé de configuration selon la revendication 15, comprenant en outre les étapes ci-dessous consistant à :
obtenir des informations supplémentaires concernant un chemin de connexion alternatif à partir du domaine adjacent, suite à la mise en oeuvre de l'étape de configuration ;
configurer une connexion supplémentaire du premier noeud au réseau VPN cible le long du chemin de connexion alternatif.

18. Agencement de domaines de réseau de communication destiné à faciliter la fourniture d'un chemin de connexion à un réseau privé virtuel (22 A-C) - VPN - au sein d'un réseau de communication présentant au moins deux domaines interconnectés (10 A-E), dont l'un correspond audit domaine de réseau de communication, d'un premier noeud dans un premier domaine à un second noeud associé à un réseau VPN cible indisponible initialement dans le premier domaine, comprenant :
un moyen (41) pour recevoir une demande d'informations concernant une quelconque existence du réseau VPN cible en provenance d'un noeud de commande de réseau VPN du premier domaine ; et
un moyen (49) pour comparer la demande d'informations à des informations de réseau VPN du domaine disnonibles dans le domaine de réseau de communication;
un moyen (42) pour renvoyer des informations de chemin de connexion au noeud de commande de réseau VPN du premier domaine, si des informations concernant un chemin de connexion au réseau VPN cible sont présentes dans les informations de réseau VPN du domaine disponibles dans le domaine de réseau de communication ; et
un moyen (44) pour acheminer la demande d'informations concernant l'existence du réseau VPN cible, du domaine de réseau de communication à un noeud de commande de réseau VPN d'un domaine supplémentaire, si des informations concernant un chemin de connexion au réseau VPN cible ne sont pas présentes dans les informations de réseau VPN du domaine disponibles dans le domaine de réseau de communication.

19. Agencement de domaines de réseau de communication selon la revendication 18, dans lequel ledit moyen d'acheminement est agencé de manière à mettre en oeuvre ledit acheminement y compris si des informations concernant un chemin de connexion au réseau VPN cible sont présentes dans les informations de réseau VPN de domaine disponibles dans le domaine de réseau de communication.

20. Agencement de domaines de réseau de communication selon la revendication 18 ou 19, comprenant en outre :
un moyen pour recevoir des informations de chemin de connexion en provenance du domaine supplémentaire ; et
un moyen pour prolonger les informations de chemin de connexion reçues avec des informations concernant le domaine de réseau de communication ;
moyennant quoi le moyen de renvoi d'informations de chemin de connexion est en outre agencé de manière à acheminer les informations de chemin de connexion prolongées vers le premier domaine.

21. Agencement de domaines de réseau de communication selon l'une quelconque des revendications 18 à 20, dans lequel lesdites informations de chemin de connexion comportent des informations de toutes les liaisons d'un éventuel chemin entre le premier noeud et le réseau VPN cible.

22. Agencement de domaines de réseau de communication selon l'une quelconque des revendications 18 à 21, comprenant en outre un moyen pour interdire que les demandes d'informations soient acheminées dans des boucles sans fin au sein du réseau de communication.

23. Réseau de communication (1) comprenant :
au moins un agencement de domaines de réseau selon l'une quelconque des revendications 18 à 22 ; et
au moins un domaine de réseau comprenant :
un moyen pour créer une demande d'informations concernant une quelconque existence du réseau VPN cible ;
un moyen pour envoyer la demande d'informations à un domaine adjacent du domaine de réseau de communication présentant l'agencement de domaine de réseau selon l'une quelconque des revendications 18 à 22 ;
un moyen pour recevoir des informations de chemin de connexion renvoyées au réseau VPN cible à partir du domaine adjacent ; et
un moyen pour configurer une connexion du premier noeud au réseau VPN cible le long du chemin de connexion des informations renvoyées à partir du domaine adjacent.

24. Réseau de communication selon la revendication 23, dans lequel le moyen de réception des informations de chemin de connexion renvoyées est en outre agencé de manière à obtenir des informations supplémentaires concernant un chemin de connexion alternatif à partir du domaine adjacent, dans lequel ledit agencement de domaines de réseau de communication comprend en outre :
un moyen pour évaluer une qualité de connexion du chemin de connexion alternatif par rapport à une qualité de connexion d'un chemin de connexion configuré ;
le moyen de configuration étant en outre agencé de manière à reconfigurer la connexion du premier noeud au réseau VPN cible le long du chemin de connexion alternatif, si la qualité de connexion du chemin de connexion alternatif est supérieure à la qualité de connexion du chemin de connexion initialement configuré.

25. Réseau de communication selon la revendication 23, dans lequel
le moyen de réception des informations de chemin de connexion renvoyées est en outre agencé de manière à obtenir des informations supplémentaires concernant un chemin de connexion alternatif à partir du domaine adjacent ;
moyennant quoi le moyen de configuration est en outre agencé de manière à configurer une connexion supplémentaire du premier noeud au réseau VPN cible le long du chemin de connexion alternatif.
